# EUROPEAN PATENT APPLICATION

(11) **EP 3 306 372 A1**
(43) Date of publication of application: **11.04.2018**
(21) Application number: 15894320.9
(22) Date of filing: 08.06.2015
(51) Int. Cl.: G02B 27/01, H04N 13/04

(54) **HEAD MOUNTED DISPLAY**

(30) Priority: 04.06.2015 KR 20150079294
(71) Applicant: LG Electronics Inc., Seoul, 07336 (KR)
(72) Inventor: CHOI, Changho, Seoul 06772 (KR); CHI, Jumin, Seoul 06772 (KR); HA, Jiyoon, Seoul 06772 (KR); JANG, Youngsoo, Seoul 06772 (KR)
(74) Representative: Frenkel, Matthias Alexander
(86) International application number: PCT/KR2015/005727
(87) International publication number: WO 2016/195147

(57) **Abstract**

When a sound event generated outside has been sensed while a specific function is executed and the sound event satisfies a specific condition, an HMD according to the present invention may provide a notification therefor to a user. More specifically, the HMD comprises: a display unit formed to output screen information; an acoustic output unit for outputting acoustic information; a microphone for sensing the sound event generated outside of the HMD in a state in which the acoustic information is output; a user input unit for receiving an input of a control command for controlling the display unit and the acoustic output unit; and a control unit for controlling the display unit to output a graphic object notifying of the generation of the sound event when the sound event sensed through the microphone satisfies a pre-configured condition, and activating the user input unit in order to change an output state of at least one of the screen information and the acoustic information while the graphic object is output.

## Description

### BACKGROUND OF THE INVENTION

### 1. Field of the invention

The present disclosure relates to a head mounted display (hereinafter referred to as "HMD") capable of providing a notification for an event generated from the outside.

### 2. Description of the related art

A head mounted display (HMD) refers to various image display devices such as glasses that are worn on a user's head to allow a user to view images (contents). Various wearable computers have been developed in accordance with the trend of weight reduction and miniaturization of digital devices, and the HMDs are widely used. The HMD may be combined with augmented reality technologies, N-screen technologies, and the like, beyond simple display functions, to provide various conveniences for the user.

In recent years, as the use of HMDs has increased, an HMD capable of executing various functions that is executable in a mobile terminal has been implemented. For example, similarly to providing specific visual information or auditory information based on the execution of a specific function in the mobile terminal, the HMD may also provide specific visual information and auditory information based on the execution of the specific function as well as to provide.

In addition, due to the specificity that the HMD is worn on a head of a user, the user using the HMD may be effectively disconnected from the outside (real world) while receiving specific visual information or auditory information, and thus various functions may be more realistically provided to the user.

However, during the use of the HMD, the user has difficulty in recognizing a situation generated from the outside. In particular, even when a specific event such as an emergency situation is generated from the outside, it may be difficult for the user to know the generation of the specific event unless the user ends the use of the HMD.

### SUMMARY OF THE INVENTION

Accordingly, an object of the present disclosure is to provide an HMD capable of notifying the generation of a specific event while maintaining the execution of a function when a specific event occurs from the outside while the function is being executed, and a control method thereof.

In order to accomplish the objective of the present disclosure, an HMD formed to be wearable on a head of a user may include a display unit formed to display screen information, an audio output unit configured to output audio information, a microphone configured to sense a sound event generated from an outside of the HMD in a state where the audio information is output, a user input unit configured to receive a control command for controlling the display unit and the audio output unit, and a controller configured to control the display unit to display a graphic object informing the generation of the sound event based on whether the sound event sensed through the microphone satisfies a preset condition, and activate the user input unit to change an output state of at least one of the screen information and the audio information while the graphic object is being displayed.

According to an embodiment, the preset condition may be related to at least one of a preset decibel range of sound, a preset waveform characteristic of sound, and preset keyword information.

According to an embodiment, the controller may change an output state of at least one of the screen information and the audio information in a different manner according to the type of the control command received through the user input unit.

According to an embodiment, the controller may control the display unit to display detailed information on the sound event on at least a part of the screen information when a preset first control command is received through the user input unit, and control the audio output unit to change an output volume of the audio information when a preset second control command is received through the user input unit.

According to an embodiment, when the sound event is voice information, the controller may control the display unit to display text information corresponding to the voice information on at least a part of the screen information based on receiving the preset first control command.

According to an embodiment, the controller may control the audio output unit to output the audio information as small as a preset ratio corresponding to a volume at which the sound event is sensed based on receiving the preset second control command.

According to an embodiment, when the screen information corresponds to video information including a plurality of consecutive images that change over time, and the audio information is output based on the display of the video information, the controller may control the display unit and the audio output unit to stop the display of the video information based on whether the sound event satisfies a specific condition among the preset conditions.

According to an embodiment, the graphic object may be displayed together with one image displayed on the display unit when the display of the video information is stopped among the plurality of images, and the controller may control the display unit and the audio output unit to change an output state of the video information according to the type of the control command received from the user input unit.

According to an embodiment, the controller may control the display unit and the audio output unit to terminate the output of the graphic object and play the video information from an image corresponding to a subsequent order of the one image when a first control command is received through the user input unit, and control the display unit and the audio output unit to terminate the display of the video information when a second control command is received through the user input unit.

According to an embodiment, the controller may control the audio output unit to decrease an output volume of the audio information based on the sound event satisfying a specific condition among the preset conditions.

According to an embodiment, when a preset control command is received through the user input unit in a state in which an output volume of the audio information is decreased, the controller may perform the recording of the sound event, and control the display unit to display information informing the execution of the recording in one region of the screen information.

According to an embodiment, the controller may recognize a position where the sound event is generated based on the analysis of the sound event, and control the display unit to display the graphic object in a region of the display unit corresponding to the position where the sound event is generated.

According to an embodiment, the HMD may further include a camera mounted on a main body of the HMD to perform the shooting of an outside of the HMD, wherein the controller activates the camera based on a specific control command received through the user input unit.

According to an embodiment, the user input unit may include at least one sensor for sensing the movement of the body of the HMD, and the specific control command may be received by at least one sensor that has sensed the movement of the body of the HMD toward a position where the sound event is generated.

According to an embodiment, the controller may control the display unit to display a preview image captured by the camera to overlap with at least a part of the screen information.

A method of controlling an HMD according to an embodiment of the present disclosure may include displaying screen information on a display unit; outputting audio information to an audio output unit, sensing a sound event generated from an outside of the HMD in a state where the audio information is output, displaying a graphic object informing the generation of the sound event when the sensed sound event satisfies a preset condition, and activating a user input unit that receives a control command for controlling the display unit and the audio output unit to change an output state of at least one of the screen information and the audio information while the graphic object is being displayed.

According to an embodiment, the preset condition may be related to at least one of a preset decibel range of sound, a preset waveform characteristic of sound, and preset keyword information.

According to an embodiment, the control method may further include changing an output state of at least one of the screen information and the audio information in a different manner based on the type of a control command when the control command is received through the user input unit while the graphic object is being displayed.

According to an embodiment, said changing the output state of at least one of the screen information and the audio information in a different manner may display detailed information on the sound event on at least a part of the screen information when a first control command is received through the user input unit, and change an output volume of the audio information when a second control command is received through the user input unit.

According to an embodiment, said displaying the graphic object on the display unit may recognize a position where the sound event is generated based on an analysis of the sound event, and display the graphic object in a region of the display unit corresponding to a position where the sound event is generated.

According to the present disclosure, the HMD may sense an external sound event through the microphone while audio information is being output, and notify the user of the external sound event, thereby allowing the user to receive information on an external situation that is difficult to recognize due to the execution of a specific function. Here, the generation of the sound event may be provided to a user through a graphic object, and the graphic object may include information on the sound event, thereby allowing the user to approximately recognize an external situation when the graphic object is displayed on the display unit.

Furthermore, in a state where the graphic object is displayed, the user may receive convenience capable of controlling the execution state of a specific function being executed in relation to a sound event generated from the outside in various ways according to various control commands.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1A is a block diagram for explaining an HMD associated with the present disclosure;
FIG. 1B is a conceptual view in which an HMD associated with the present disclosure is viewed from one direction;
FIG. 2A is a flowchart of a method of controlling an HMD according to the present disclosure, and FIGS. 2B and 2C are representative views for explaining a method of controlling an HMD according to the present disclosure;
FIGS. 3A and 3B are views illustrating various display methods of the graphic object;
FIGS. 4A and 4B are views illustrating an embodiment in which the output of screen information and audio information are controlled differently according to the type of a control command;
FIGS. 5A, 5B and 5C are views illustrating an embodiment in which an output state of video information is changed based on a control command when the video information is displayed;
FIGS. 6A and 6B are views illustrating an embodiment related to a case where the output of video information is stopped based on a specific sound event;
FIGS. 7A and 7B are views illustrating an embodiment of controlling an output state of screen information and audio information according to the type of a control command when a graphic object is displayed in response to a position where a sound event is generated;
FIG. 8 is a view related to an embodiment of providing a preview screen captured based on an input of a control command; and
FIG. 9 is a view illustrating an embodiment in which an notification of an external event that has generated during the use of the HMD is displayed when the use of the HMD is terminated.

### DETAILED DESCRIPTION OF THE INVENTION

Hereinafter, preferred embodiments of the present disclosure will be described in detail with reference to the accompanying drawings, and the same or similar elements are designated with the same numeral references regardless of the numerals in the drawings and their redundant description will be omitted. A suffix "module" or "unit" used for constituent elements disclosed in the following description is merely intended for easy description of the specification, and the suffix itself does not give any special meaning or function. In describing the present disclosure, moreover, the detailed description will be omitted when a specific description for publicly known technologies to which the invention pertains is judged to obscure the gist of the present disclosure. The accompanying drawings are used to help easily understand the technical idea of the present disclosure and it should be understood that the idea of the present disclosure is not limited by the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation as far as it represents a definitely different meaning from the context.

Terms "include" or "has" used herein should be understood that they are intended to indicate an existence of several components or several steps, disclosed in the specification, and it may also be understood that part of the components or steps may not be included or additional components or steps may further be included.

The HMD described in this specification may include a wearable device (for example, a glass-type terminal (smart glasses)) and the like.

However, it may be easily understood by those skilled in the art that the configuration according to an embodiment described herein may be applied to mobile phones, smart phones, laptop computers, digital broadcasting terminals, personal digital assistants (PDAs), PMPs (personal digital assistants) the present invention can also be applied to mobile terminals such as a portable multimedia player, a navigation system, a slate PC, a tablet PC, an ultrabook, and a smartwatch.

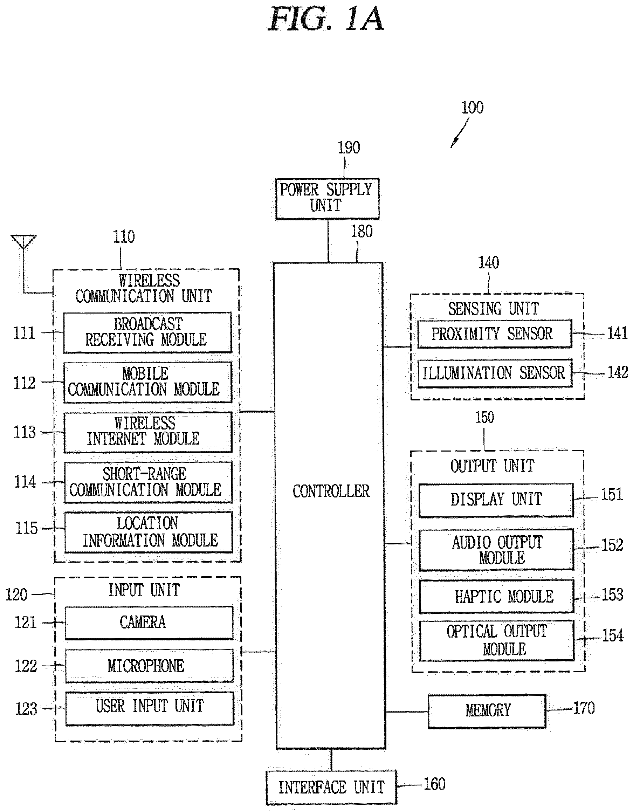

Referring to FIG. 1A, FIG. 1A is a block diagram for explaining an HMD associated with the present invention.

The HMD 100 may include a wireless communication unit 110, an input unit 120, a sensing unit 140, an output unit 150, an interface unit 160, a memory 170, a controller 180, a power supply unit 190, and the like. The constituent elements illustrated in FIG. 1A may not be necessarily required, and the HMD described in the present disclosure may have a greater or less number of elements than those illustrated elements.

More specifically, of the foregoing constituent elements, the wireless communication unit 110 may include at least one module capable of performing wireless communication between the HMD 100 and a wireless communication system, between the HMD 100 and another HMD 100, between the HMD 100 and a mobile or stationary terminal, between the HMD 100 and a control apparatus, between the HMD 100 and a camera installed at an outside thereof to perform wireless communication or between the HMD 100 and an external server.

In addition, the wireless communication unit 110 may include one or more modules for connecting the HMD 100 to one or more networks.

The wireless communication unit 110 may include at least one of a broadcast receiving module 111, a mobile communication module 112, a wireless Internet module 113, a short-range communication module 114, a location information module 115 and the like.

The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 is typically implemented using one or more sensors configured to sense internal information of the HMD, the surrounding environment of the HMD, user information, and the like. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone 122, a battery gage, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). On the other hand, the HMD disclosed herein may utilize information in such a manner of combining information sensed by at least two sensors of those sensors.

The output unit 150 may be configured to output an audio signal, a video signal or a tactile signal. The output unit 150 may include a display unit 151, an audio output unit 152, a haptic module 153, an optical output unit 154 and the like.

The interface unit 160 serves as an interface with various types of external devices that can be coupled to the HMD 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The HMD 100 may execute an appropriate control related to a connected external device, in response to the external device being connected to the interface unit 160.

In addition, the memory 170 stores data supporting various functions of the HMD 100. The memory 170 is typically implemented to store data to support various functions or features of the HMD 100. For instance, the memory 170 may be configured to store application programs executed in the HMD 100, data or instructions for operations of the HMD 100, and the like. At least some of those application programs may be downloaded from an external server via wireless communication. Some others of those application programs may be installed within the HMD 100 at the time of being shipped for basic functions of the HMD 100 (for example, displaying screen information such as an image or video, receiving a call, placing a call, receiving a message, sending a message, etc.). On the other hand, the application programs may be stored in the memory 170, installed in the HMD 100, and executed by the controller 180 to perform an operation (or a function) of the HMD 100.

The controller 180 may typically control an overall operation of the HMD 100 in addition to the operations related to the application programs. The controller 180 may provide or process information or functions appropriate for a user in a manner of processing signals, data, information and the like, which are input or output by the aforementioned components, or activating the application programs stored in the memory 170.

Furthermore, the controller 180 may control at least part of the components illustrated in FIG 1A, in order to drive the application programs stored in the memory 170. In addition, the controller 180 may drive the application programs by combining at least two of the components included in the HMD 100 for operation.

The power supply unit 190 may receive external power or internal power and supply appropriate power required for operating respective elements and components included in the portable HMD 100 under the control of the controller 180. The power supply unit 190 may include a battery, and the battery may be an embedded battery or a replaceable battery.

At least part of those elements and components may be combined to implement operation and control of the HMD or a control method of the HMD according to various exemplary embodiments described herein. Furthermore, the operation and control or the control method of the HMD may be implemented in the HMD in such a manner of activating at least one application program stored in the memory 170.

Hereinafter, each aforementioned component will be described in more detail with reference to FIG 1A, prior to explaining various exemplary embodiments implemented by the foregoing HMD 100.

First, the wireless communication unit 110 will be described. The broadcast receiving module 111 of the wireless communication unit 110 may receive a broadcast signal and/or broadcast associated information from an external broadcast managing entity via a broadcast channel. The broadcast channel may include a satellite channel and/or a terrestrial channel. At least two broadcast receiving modules 111 may be provided in the HMD 100 to simultaneously receive at least two broadcast channels or switch the broadcast channels.

The broadcast managing entity may indicate a server that generates and transmits a broadcast signal and/or broadcast associated information or a server that receives a previously generated broadcast signal and/or broadcast associated information and sends them to an HMD or a device connected to the HMD to control the HMD (e.g., control apparatus, terminal, etc.). The broadcast signal may be implemented as a TV broadcast signal, a radio broadcast signal, and a data broadcast signal, among others.

The broadcast signal may be encoded according to at least one of technical standards (or transmission methods, for example, ISO, IEC, DVB, ATSC, etc.) for transmission and reception of digital broadcast signals. The broadcast receiving module 111 may receive the digital broadcast signals using a method appropriate for a technical specification defined in the technical standards.

The broadcast associated information may denote information associated with a broadcast program or broadcast service provider. The broadcast associated information may also be provided through a mobile communication network. In this case, it may be received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a memory 170.

The mobile communication module 112 may transmit/receive wireless signals to/from at least one of network entities, for example, a base station, an external terminal, a server, and the like, on a mobile communication network, which is constructed according to technical standards or transmission methods for mobile communications (for example, Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), Long Term Evolution-Advanced (LTE-A), etc.)

Here, the wireless signals may include audio call signal, video (telephony) call signal, or various formats of data according to transmission/reception of text/multimedia messages.

The wireless Internet module 113 refers to a module for supporting wireless Internet access, and may be built-in or externally installed on the HMD 100. The wireless Internet module 113 may transmit and/or receive wireless signals via communication networks according to wireless Internet technologies.

Examples of such wireless Internet access may include Wireless LAN (WLAN), Wireless-Fidelity (Wi-Fi), Wireless Fidelity Direct (Wi-Fi Direct), Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), LTE (Long Term Evolution), LTE-A (Long Term Evolution-Advanced), and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LET and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, and the like. The short range communication module 114 may support wireless communication between the HMD 100 and a wireless communication system, between the HMD 100 and another HMD 100, between the HMD 100 and a mobile or stationary terminal, between the HMD 100 and a control device, between the HMD 100 and a camera installed outside to perform wireless communication or between the HMD 100 and an external server, via wireless area networks. The short-range communication module 114 denotes a module for short-range communications.

Here, the HMD may be a device (e.g., a mobile phone, a smart phone, a smartwatch, a notebook computer, a control device, etc.) capable of exchanging data (or connecting) with the HMD 100 according to the present disclosure. The short-range communication module 114 may sense (recognize) a device capable of communicating with the HMD 100 near the HMD 100. Moreover, when the sensed device is a device authenticated to communicate with the HMD 100 according to the present disclosure, the controller 180 may transmit at least a part of the data processed in the HMD 100 through the short-range communication device 114, and transmit at least a part of the data processed by the device to the HMD 100.

Accordingly, the user of the HMD 100 may use data processed in the device through the HMD 100. For example, as a result, the user may perform a phone call through the HMD 100 when a call is received at the device or check the received message through the HMD 100 when a message is received at the device.

The location information module 115 is a module for acquiring a position (current position) of the HMD, and a representative example thereof includes a Global Position System (GPS) module or WiFi (Wireless Fidelity) module. For example, when the HMD uses the GPS module, a position of the HMD may be acquired using a signal sent from a GPS satellite. As another example, when the HMD uses the Wi-Fi module, a position of the HMD may be acquired based on information related to a wireless access point (AP) which transmits or receives a wireless signal to or from the Wi-Fi module. According to the need, the location information module 115 may perform any function of the other modules of the wireless communication unit 110 to obtain data on the location of the HMD. As a module used to acquire the location (or current location) of the HMD, the location information module 115 may not be necessarily limited to a module for directly calculating or acquiring the location of the HMD.

Next, the input unit 120 may be configured to provide image information (or signal), audio information (or signal), data, or enter information received from the user, and may include one or a plurality of cameras 121 to enter image information. The camera 121 processes a image frame, such as still picture or video, obtained by an image sensor in a video phone call or image capturing mode. The processed image frames may be displayed on the display unit 151. On the other hand, the plurality of cameras 121 disposed in the HMD 100 may be arranged in a matrix configuration. By use of the cameras 121 having the matrix configuration, a plurality of image information having various angles or focal points may be input into the HMD 100. As another example, the cameras 121 may be located in a stereoscopic arrangement to acquire left and right images for implementing a stereoscopic image.

The microphone 122 may process an external audio signal into electric audio data. The processed audio data may be utilized in various manners according to a function being executed in the HMD 100 (or an application program being executed). On the other hand, the microphone 122 may include assorted noise removing algorithms to remove noise generated in the course of receiving the external audio signal.

The user input unit 123 may receive information input by a user. When information is received through the user input unit 123, the controller 180 may control an operation of the HMD 100 to correspond to the input information. The user input unit 123 may include a mechanical input element (or a mechanical key, for example, a button located on a front/rear surface or a side surface of the HMD 100, a dome switch, a jog wheel, a jog switch, etc.), and a touch-sensitive input means. As an example, the touch-sensitive input means may be at least one of a touch pad and a touch panel.

On the other hand, the sensing unit 140 may sense at least one of internal information of the HMD, surrounding environment information of the HMD and user information, and generate a sensing signal corresponding to it. The controller 180 may control an operation of the HMD 100 or execute data processing, a function or an operation related to an application program installed in the HMD based on the sensing signal. Hereinafter, description will be given in more detail of representative sensors of various sensors which may be included in the sensing unit 140.

First, a proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may be arranged at an inner region of the HMD covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch-sensitive input means of the user input unit 123 is a capacitive type, the proximity sensor 141 may be configured to detect sense the proximity of an object due to a change of an electromagnetic field according to the proximity of the object having a conductivity. In this case, the user input unit 123 itself may be classified into a proximity sensor.

On the other hand, for the sake of convenience of explanation, a state that the pointer is positioned to be proximate onto the user input unit 123 without contact will be referred to as "proximity touch," whereas a state that the pointer substantially comes in contact with the user input unit 123 will be referred to as "contact touch." For the position corresponding to the proximity touch of the pointer on the user input unit 123, such position will correspond to a position where the pointer faces perpendicular to the user input unit 123 upon the proximity touch of the pointer. The proximity sensor 141 may sense proximity touch, and proximity touch patterns (e.g., distance, direction, speed, time, position, moving state, etc.). On the other hand, the controller 180 may process data (or information) corresponding to the proximity touches and the proximity touch patterns sensed by the proximity sensor 141, and display visual information corresponding to the processed data on the display unit 151. In addition, the controller 180 may control the HMD 100 to execute different operations or process different data (or information) according to whether a touch with respect to the same point on the user input unit 123 is either a proximity touch or a contact touch.

A touch sensor may sense a touch (or touch input) applied onto the user input unit 123 using at least one of various types of touch methods, such as a resistive type, a capacitive type, an infrared type, a magnetic field type, and the like.

As one example, the touch sensor may be configured to convert changes of pressure applied to a specific part of the user input unit 123 or a capacitance occurring from a specific part of the user input unit 123, into electric input signals. The touch sensor may be configured to detect a position, an area when a touch object applying a touch to the user input unit 123 is touched on the touch sensor, a pressure at the time of touch, a capacitance at the time of touch, and the like. Here, the touch object body may be a finger, a touch pen or stylus pen, a pointer, or the like as an object through which a touch is applied to the touch sensor.

When a touch input is sensed by a touch sensor, corresponding signals may be transmitted to a touch controller. The touch controller may process the received signals, and then transmit corresponding data to the controller 180. Accordingly, the controller 180 may sense which region of the user input unit 123 has been touched. Here, the touch controller may be a component separate from the controller 180 or the controller 180 itself.

On the other hand, the controller 180 may perform a different control or perform the same control according to the type of the touch object that touches the user input unit 123. Whether to execute the different control or the same control according to the object which gives a touch input may be decided based on a current operating state of the HMD 100 or a currently executed application program.

Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swype touch, a hovering touch, and the like, to the user input unit 123.

An ultrasonic sensor may be configured to recognize position information relating to a sensing object by using ultrasonic waves. The controller 180 may calculate a position of a wave generation source based on information sensed by an illumination sensor and a plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 constructing the input unit 120 may be a type of camera sensor. The camera sensor may include at least one of a photo sensor (or image sensor) and a laser sensor.

Implementing the camera 121 with a laser sensor may allow detection of a touch of a physical object with respect to a 3D stereoscopic image. The camera 121 and the laser sensor may be combined to detect a touch of the sensing object with respect to a 3D stereoscopic image. More specifically, the photo sensor is integrated with photo diodes and transistors in the rows and columns thereof, and a content placed on the photo sensor may be scanned by using an electrical signal that is changed according to the amount of light applied to the photo diode. Namely, the photo sensor may calculate the coordinates of the sensing object according to variation of light to thus obtain position information of the sensing object.

The display unit 151 may display (output) information processed in the HMD 100. For example, the display unit 151 may display execution screen information of an application program driven in the HMD 100 or user interface (UI) and graphic user interface (GUI) information in response to the execution screen information.

Furthermore, the display unit 151 may also be implemented as a stereoscopic display unit for displaying stereoscopic images.

The stereoscopic display unit may employ a stereoscopic display scheme such as stereoscopic scheme (a glass scheme), an auto-stereoscopic scheme (glassless scheme), a projection scheme (holographic scheme), or the like.

In general, a 3-dimensional stereoscopic image may include a left image (image for the left eye) and a right image (image for the right eye). The method of implementing a 3-dimensional stereoscopic image can be divided into a top-down method in which a left image and a right image are disposed at the top and bottom within a frame, a left-to-right (L-to-R) or side by side method in which a left image and a right image are disposed at the left and right within a frame, a checker board method in which the pieces of a left image and a right image are disposed in a tile format, an interlaced method in which a left and a right image are alternately disposed for each column and row unit, and a time sequential or frame by frame method in which a left image and a right image are alternately displayed for each time frame, according to the method of combining a left image and a right image into a 3-dimensional stereoscopic image.

Also, as for a 3D thumbnail image, a left image thumbnail and a right image thumbnail may be generated from a left image and a right image of an original image frame, respectively, and then combined to generate a single 3D thumbnail image. In general, thumbnail refers to a reduced image or a reduced still image. The thusly generated left image thumbnail and the right image thumbnail may be displayed with a horizontal distance difference therebetween by a depth corresponding to the disparity between the left image and the right image on the screen, providing a stereoscopic space sense.

A left image and a right image required for implementing a 3D stereoscopic image may be displayed on the stereoscopic display unit by a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. Also, the audio output unit 152 may also provide audible output signals related to a particular function (e.g., a call signal reception sound, a message reception sound, etc.) performed by the HMD 100. The audio output module 152 may include a receiver, a speaker, a buzzer or the like.

A haptic module 153 may generate various tactile effects the that user may feel. A typical example of the tactile effect generated by the haptic module 153 may be vibration. Strength, pattern and the like of the vibration generated by the haptic module 153 may be controllable by a user selection or setting of the controller. For example, the haptic module 153 may output different vibrations in a combining manner or a sequential manner.

Besides vibration, the haptic module 153 may generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 153 may be configured to transmit tactile effects through a user's direct contact, or a user's muscular sense using a a head, a face, a finger or a hand. The haptic module 153 may be implemented in two or more in number according to the configuration of the HMD 100.

An optical output module 154 may output a signal for indicating an event generation using light of a light source of the HMD 100. Examples of events generated in the HMD 100 may include a message reception, a call signal reception, a missed call, an alarm, a schedule notice, an email reception, an information reception through an application, displaying an image (or video) and the like. In other words, the light output unit 154 may notify that the HMD 100 is performing a specific operation (function) by the user.

A signal output by the optical output module 154 may be implemented in such a manner that the HMD emits monochromatic light or light with a plurality of colors. The signal output may be terminated based on whether the HMD detects the user's event confirmation or ends the operation being performed in the HMD.

The interface unit 160 serves as an interface for external devices to be connected with the HMD 100. The interface unit 160 may allow a data reception from an external device, a power delivery to each component in the HMD 100, or a data transmission from the HMD 100 to an external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

On the other hand, the identification module may be configured as a chip for storing various information required to authenticate an authority to use the HMD 100, which may include a User Identity Module (UIM), a Subscriber Identity Module (SIM), and the like. In addition, the device having the identification module (also referred to herein as an "identifying device") may take the form of a smart card. Accordingly, the identifying device may be connected with the terminal 100 via the interface unit 160.

The interface unit 160 may serve as a path for power to be supplied from an external cradle to the HMD 100 when the HMD 100 is connected to the external cradle or as a path for transferring various command signals inputted from the cradle by a user to the HMD 100. Such various command signals or power inputted from the cradle may operate as signals for recognizing that the HMD 100 has accurately been mounted to the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the HMD 100 may operate in association with a web storage which performs the storage function of the memory 170 on the Internet.

As aforementioned, the controller 180 may typically control the general operations of the HMD 100. For example, the controller 180 may set or release a lock state for restricting a user from inputting a control command with respect to applications when a state of the HMD meets a preset condition.

Furthermore, the controller 180 may also perform controlling and processing related to voice calls, data communications, video calls, and the like, or perform pattern recognition processing to recognize a handwriting input or a picture drawing input performed on the user input unit 123 as characters or images, respectively. In addition, the controller 180 may control one or combination of those components in order to implement various exemplary embodiment disclosed herein on the HMD 100.

The power supply unit 190 may receive external power or internal power and supply appropriate power required for operating respective elements and components included in the HMD 100 under the control of the controller 180. The power supply unit 190 may include a battery, which is typically rechargeable or be detachably coupled to the HMD body for charging.

Furthermore, the power supply unit 190 may include a connection port. The connection port may be configured as one example of the interface unit 160 to which an external (re)charger for supplying power to recharge the battery is electrically connected.

As another example, the power supply unit 190 may be configured to recharge the battery in a wireless manner without use of the connection port. Here, the power supply unit 190 may receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable or its similar medium using, for example, software, hardware, or any combination thereof.

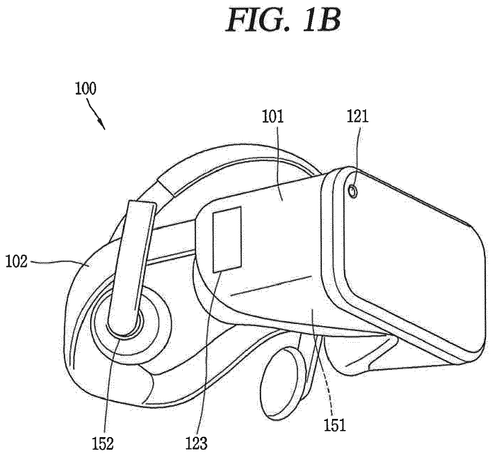

Referring to FIG. 1B, FIG. 1B is a conceptual view in which an HMD associated with the present disclosure is viewed from one direction;
Referring to FIG 1B, the HMD 200 associated with the present disclosure may be formed to be worn on a head portion (or head, face) of a human body, and may include a frame unit (case, housing, cover, etc.) for the same. The frame unit may be formed of a flexible material to facilitate wearing. It is illustrated in the drawing that the frame unit includes a first frame 101 and a second frame 102 with different materials.

For an example, the first frame 101 may perform the role of providing a space in which at least one of constituent elements that will be described in FIG 1A can be disposed, and the second frame 202 may perform the role of supporting (or fixing) the first frame 201 to be mounted on a head portion of a human body.

The frame unit may be referred to as a main body (or HMD main body) or body (or HMD body). Here, the HMD main body (or HMD body) may be regarded the HMD 100 as at least one congregate and thus understood to have a concept referring to this.

The frame may be supported on the head and defines a space for mounting various components. As illustrated in the drawing, electronic components such as a camera 121, an output unit, a user input unit 123, a controller, a sensing unit, and the like may be mounted on the first frame 101. Here, the display unit 151 may be formed to cover at least one of the user's left and right eyes (or to face at least one of the user's left and right eyes), and formed in a detachable manner.

An electronic component such as an audio output unit 152 or the like may be mounted on the second frame 102. However, the present disclosure may not be necessarily limited to this, and constituent elements that will be described below in FIG 1A and constituent elements required for the HMD may be disposed in various ways on the first frame 101 and second frame 102 by a user's selection.

The controller 180 (see FIG. 1A) is configured to control various electronic components included in the HMD 100. The controller 180 may be understood to have a configuration corresponding to the controller 180 that will be described below in FIG 1A.

The display unit 151 may be mounted on the frame unit to perform the role of displaying still image (for example, image, video, etc.) in front of the user's eyes. The display unit 151 may be disposed to correspond to at least one of the left and right eyes to display screen information in front of the user's eyes when the user wears the HMD 100. In the present drawing, it is illustrated that the display unit 151 is positioned to cover both the left and right eyes so that an image can be output toward both the left and right eyes of the user.

Furthermore, the display unit 151 may project an image to the user's eyes using a prism. Also, the prism may be formed from optically transparent material such that the user can view both the projected image and a general visual field (a range that the user views through the eyes) in front of the user.

In such a manner, the image output through the display unit 151 may be viewed while overlapping with the general visual field. The HMD 100 may provide augmented reality (AR) in which a virtual image overlaps with an image or background of reality using the characteristics of the display to show one image.

Furthermore, the display unit 151 of an HMD associated with the present disclosure may be located within the HMD body. Specifically, when the HMD is worn on the user's head, the display unit 151 may be disposed at a position facing the eyes of the user inside the HMD.

The camera 121 may be located adjacent to either or both of the left and right eyes to capture an image. The camera 121 may be disposed adjacent to eyes to face a front side, and thus the camera 121 may acquire a scene viewed by a user as an image.

According to the drawing, it is illustrated that one camera 121 is provided therein, but present disclosure may not be necessarily limited to this. The camera 121 may be provided with a plural number to acquire a stereoscopic image.

The HMD 100 may include a user input unit for receiving a control command. For example, as shown in FIG. 1B, the user input unit may be mounted on one area of the body of the HMD 100 and may be based on a tactile manner in which the user operates a tactile feeling such as touch, push, A control command can be input. The drawing illustrates a view in which the user input unit 123 operable in a pushing manner and a touching manner are disposed on the frame unit.

For another example, the user input unit of the HMD 100 according to the present disclosure may receive a user's preset gesture with respect to the HMD 100, a predetermined motion of the body of the HMD 100, and the like, as a control command. To this end, the user input may include at least one sensor. For example, the HMD 100 may include a gyro sensor or an acceleration sensor for sensing movement such as rotation or inclination of the body of the HMD 100. In addition, the user may further include a camera or an infrared sensor for sensing a preset line of sight of the user as a preset gesture for the HMD 100.

As described above, when a control command is received through the user input unit, the controller may control at least one of the display unit and the audio output unit based on the control command.

Furthermore, the HMD 100 may include a microphone (not shown) which processes input sound into electric audio data, and an audio output unit 152 for outputting an audible sound. The audio output unit 152 may be configured to transfer the audible sound in a general audio output manner or an osteoconductive manner. When the audio output unit 152 is implemented in the osteoconductive manner, the audio output unit 152 may be closely adhered onto the head portion when the user wears the HMD 200 and vibrate the user's skull to transfer sounds.

Furthermore, the HMD 100 according to the present disclosure may include at least one microphone (not shown) capable of sensing a sound event generated from an outside of the HMD 100 on the body of the HMD 100. The microphone may sense a sound event generated from the outside of the HMD 100 in which the user is unable to hear while the audio output unit 152 outputs audio information. For example, the microphone may be a directional microphone capable of detecting a position where the sound event is generated.

The HMD according to the present disclosure may sense a sound event generated from an outside of the HMD using a microphone while audio information is output by the audio output unit. The user who uses the HMD may be provided with information on the generation of the sound event. For example, the HMD may display visual information indicating the generation of the sound event using the display unit. If screen information is being displayed on the display unit, the visual information may be displayed together with the screen information. Accordingly, since the user is provided with information on a specific sound generated from an outside of the HMD, there is an effect capable of recognizing an external situation of the HMD even while using the HMD.

Hereinafter, a method of controlling the HMD according to the present disclosure will be described in detail with reference to the accompanying drawings.

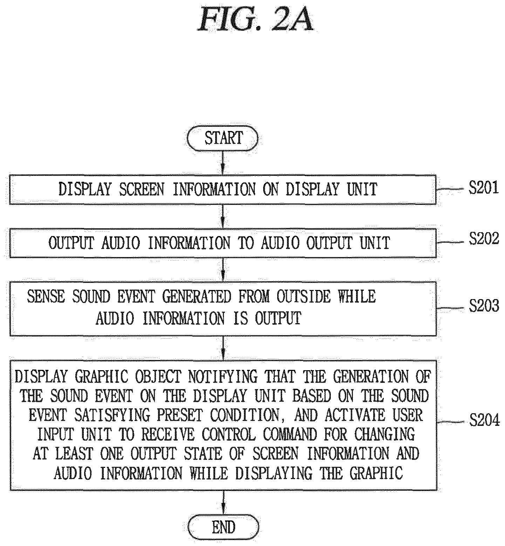

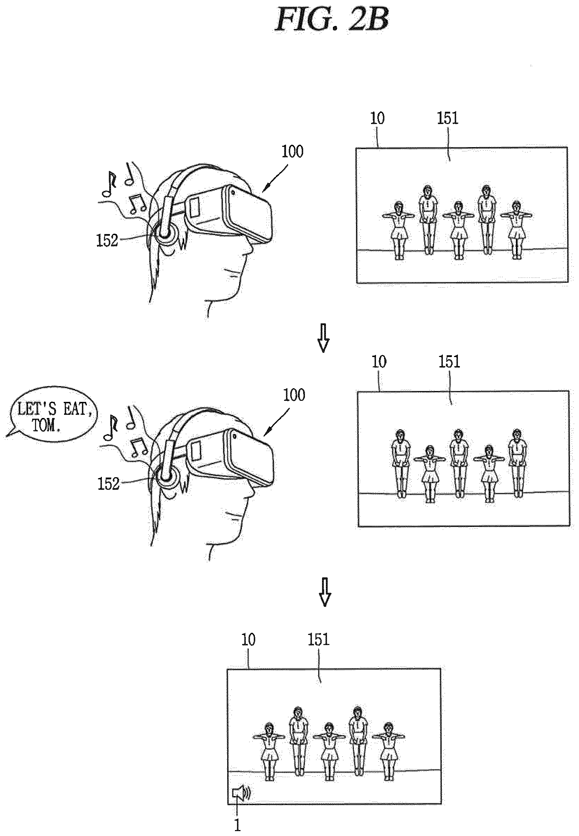

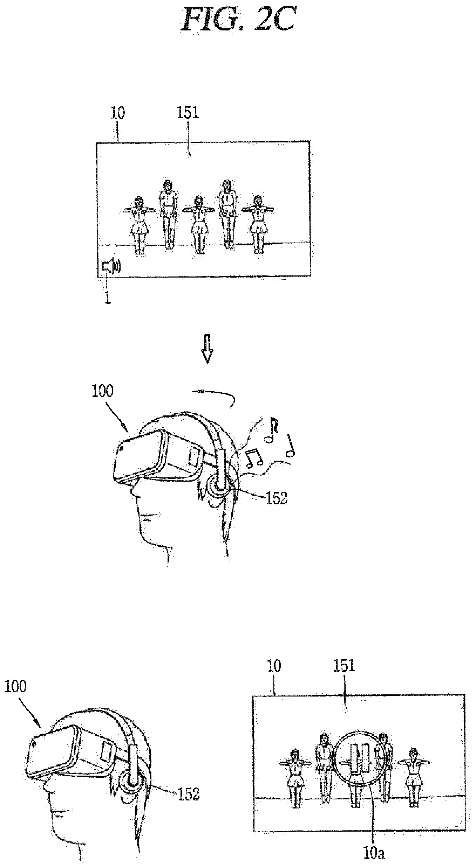

FIG. 2A is a flowchart of a method of controlling an HMD according to the present disclosure, and FIGS. 2B and 2C are representative views for explaining a method of controlling an HMD according to the present disclosure;

First, referring to FIG. 2A, screen information may be displayed on the display unit of the HMD according to the present disclosure (S201).

The screen information may include all types of screen information such as an execution screen and a standby screen according to the execution of a specific function.

Also, audio information may be output to the audio output unit of the HMD according to the present disclosure (S202).

The audio information may be output based on the execution of a specific function or output based on the output of the screen information. For example, the audio information may be output independently of the screen information based on the execution of a specific application (e.g., a music playback application).

For another example, when the screen information corresponds to video information including a plurality of consecutive images that change according to the passage of time, the audio information may be output based on the display of the video information. For example, as illustrated in the first drawing of FIG. 2B, the screen information may be video information 10, and the audio information based on the display of the video information 10 may be output to the audio output unit 152.

In the flowchart of FIG. 2A, the audio information is output after the screen information is output, but the present disclosure is not limited thereto. In other words, it is not required that the display unit 151 displays the screen information.

In the state that the audio information is output, a sound event generated from an outside of the HMD may be sensed by the microphone (S203).

The sound event may include all types of sounds generated an outside of the HMD while the audio information is output. For example, the sound event may include various types of sounds such as a siren sound, an operating sound of an external electronic device, and the like. For another example, the sound event may be an event generated by a voice of a specific person as illustrated in the second drawing of FIG. 2B.

When the sound event is sensed through the microphone as described above, the controller 180 may display a graphic object indicating the generation of the sound event on the display unit based on the sound event satisfying a preset condition. Also, while the graphic object is being displayed, the user input unit may be activated to receive a control command for controlling the display unit and the audio output unit (S204).

The preset condition is a condition for determining the type of a sound event generated from an outside of the HMD, and may be a condition related to at least one of a preset decibel range of sound, a preset waveform characteristic of sound, and preset keyword information.

For example, the controller 180 may display the graphic object when a sound event having a specific volume is generated. In other words, when a sound event sensed through the microphone is included in a preset decibel range, a graphic object corresponding to the sound event may be displayed.

For another example, the controller 180 may determine whether or not preset keyword information is included in the sound event. The preset keyword information may include, for example, a name of a person or a word having a specific meaning, and may be registered with various information according to the setting of the user.

For still another example, the controller 180 may determine whether a characteristic of a waveform corresponding to the sound event corresponds to a preset waveform characteristic. For example, the sound event may be generated by a voice of a specific person or generated by playing a specific musical instrument or the like. In this case, the preset waveform characteristic may be stored in the memory as information corresponding to the voice of the specific person, a specific musical instrument or the like.

More specifically, the controller 180 may determine whether the preset condition is satisfied by comparing the amplitude, period, and frequency of a waveform corresponding to the sound event with those of a preset waveform. If the characteristics such as the amplitude, period, and frequency of a waveform corresponding to the sound event correspond to those of the preset waveform, the controller 180 determines that the sound event satisfies the preset condition.

In other words, as illustrated in the second drawing of FIG. 2B, when the sound event is voice information, the controller 180 may determine whether or not a waveform characteristic corresponding to the sound event corresponds to a prestored waveform characteristic of a specific person. If it is determined that the voice information is a voice of the specific person, the controller 180 may determine that the sound event satisfies a preset condition.

In addition, the controller 180 may display the graphic object on the display unit 151 based on whether the sound event satisfies a preset condition. Here, the graphic object may include information on the sound event as visual information for notifying the generation of the sound event.

For an example, the graphic object may be an icon including information on the type of the sound event. In other words, the graphic object may be an icon indicating a volume or content of the sound event, a source of sound event generation, or the like.

For another example, the graphic object may include information on a location where the sound event is generated. In this case, the controller 180 may display the graphic object 1 in a region of the display unit 151 corresponding to the position where the sound event is generated, as illustrated in the third drawing of FIG. 2B.

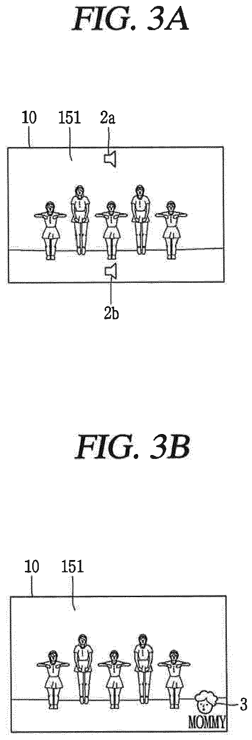

Hereinafter, an embodiment related to a graphic object including information related to the sound event will be described with reference to FIGS. 3A and 3B.

Meanwhile, while the graphic object is being displayed on the display unit 151, the controller 180 may activate the user input unit to receive a control command for changing at least one output state of the screen information and the audio information. In other words, a control command received through the user input unit in a state in which the graphic object is displayed may be processed as an input for controlling at least one of the display unit 151 and the audio output unit 152.

The control command received through the user input unit may be of various types. For an example, the user input unit may be mounted in one region of the main body to receive a control command through a tactile input such as a touch or a push from the user.

For another example, the user input unit may receive the control command by detecting the user's preset gesture (e.g., movement of a hand within a preset distance from the main body, the user's gaze, etc.) with respect to the main body. To this end, the user input unit may include a proximity sensor or a camera for sensing the preset gesture.

For still another example, the user input unit may include at least one sensor for sensing the movement of the main body, and a control command may be received by sensing the movement of the main body.

For example, in a state where the graphic object 1 is displayed on the display unit 151 as illustrated in the first drawing of FIG. 2C, it may be possible to sense a movement in which the body of the HMD 100 rotates in a specific direction by the user input unit as illustrated in the second drawing of FIG. 2C. In this case, the controller 180 may process the movement of the body of the HMD 100 sensed by the user input unit as the control command.

When a control command is received through the user input unit, the controller 180 may change at least one output state of the screen information and the audio information based on the control command.

For example, when video information is displayed on the display unit 151 and audio information is output from the audio output unit 152 based on the display of the video information as illustrated in FIG. 2C, the display of the video information may be stopped as illustrated in the third drawing of FIG. 2C.

In addition, the controller 180 may vary an output state of the screen information and the audio information in various ways based on the type of a control command received through the user input unit.

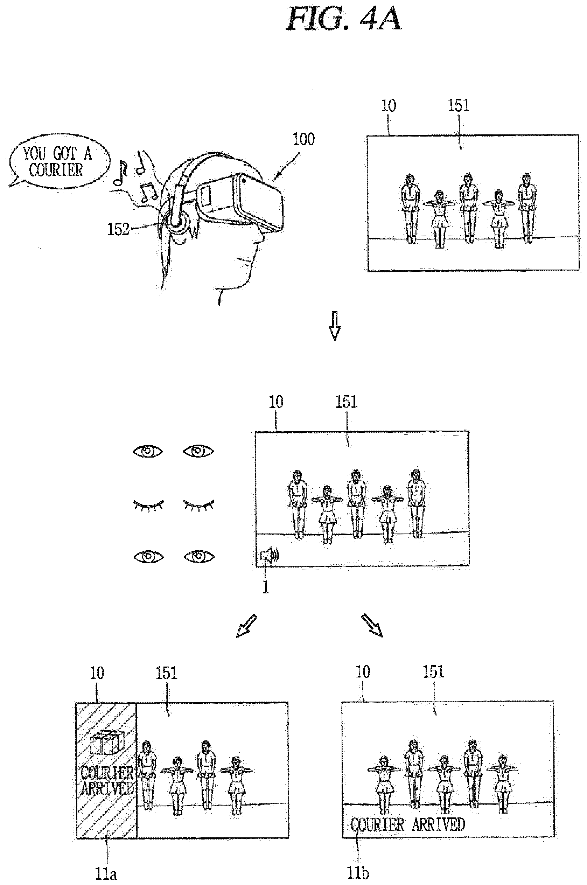

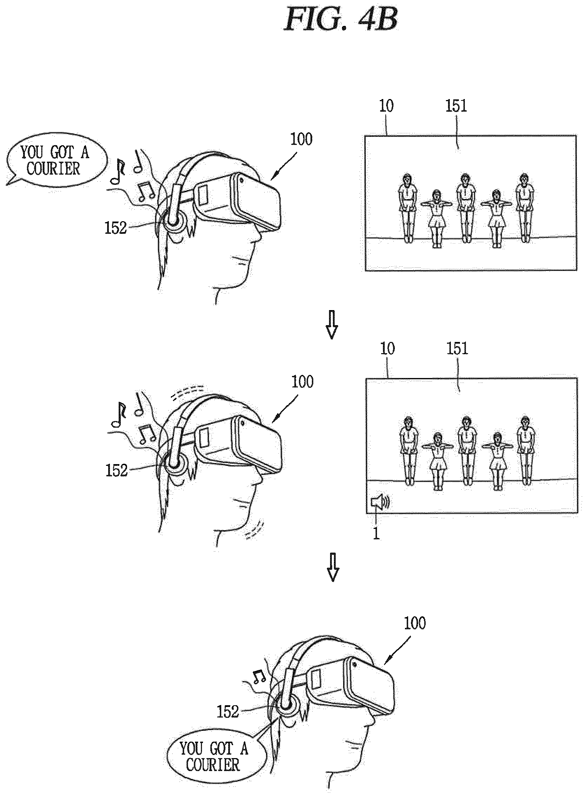

For example, the output of at least one of the screen information and the audio information may be terminated or another visual information may be displayed to overlap with the screen information. Also, the controller 180 may change the audio information to a preset volume to output the audio information. An embodiment related to this will be described later with reference to FIGS. 4A and 4B.

As described above, the HMD according to the present disclosure allows a user to recognize an external situation through a graphic object that notifies the generation of a sound event even when the user cannot hear the sound generated from the outside while receiving audio information. The graphic object that notifies the generation of the sound event may be output on the basis of satisfying a preset condition, and thus the notification of a sound that the user does not need to recognize may be restricted, and information may be selectively provided for only a specific external situation that the user needs to recognize.

In addition, it may be also possible to provide a control method in which a user recognizes a specific external situation and then easily changes an output state of the screen information and the audio information using various control commands.

As described above, the controller 180 may display the graphic object on the display unit 151 based on whether the sound event satisfies a preset condition.

Here, the graphic object may include information related to the sound event. More specifically, information related to the sound event may include a type of the sound event, a volume at which the sound event is generated, a location where the sound event is generated, and the like. In addition, when the sound event is voice information, the graphic object may include information of a specific person corresponding to the voice information, content included in the voice information, information on a keyword, or the like.

At this time, the graphic object may be displayed in various ways according to information related to the sound event. In other words, the position, size, shape, and color of the graphic object displayed on the display unit 151 may be changed in various ways according to the sound event.

FIGS. 3A and 3B are views illustrating various display methods of the graphic object.

First, the microphone of the HMD according to the present disclosure may be a directional microphone capable of selectively sensing only a sound within a narrow angle heard in a specific direction. In addition, the HMD may include a plurality of microphones to determine the location of the sound event based on the HMD.

When the sound event is sensed through the microphone, the controller 180 may determine a position where the sound event is generated with respect to the HMD based on the analysis of the sound event.

For example, the controller 180 may determine the direction of a point where the sound event is generated from the left side, the right side, the front side, and the rear side of the HMD main body on the basis of a state in which the user wears the HMD. Also, the controller 180 may determine a distance from the body of the HMD to a point where the sound event is generated based on the sensed volume of the sound event.

As described above, when determining a position where the sound event is generated, the controller 180 may display the graphic object corresponding to a position where the sound event is generated in a region of the display unit 151 based on the sound event satisfying a preset condition.

In other words, as illustrated in FIG. 3A, when the sound event is generated on a front side of the HMD body while the user wears the HMD, the display unit 151 may be controlled to display the graphic object 2a at an upper center of the screen information 10. For another example, as illustrated in FIG. 3A, when the sound event is generated on a rear side of the HMD body while the user wears the HMD, the display unit 151 may be controlled to display the graphic object 2b at a lower center of the screen information 10.

Meanwhile, although not shown in the drawing, the controller 180 may adjust the display size or color of the graphic object based on a distance to the point where the sound event is generated. For example, the controller 180 may control the display unit 151 to display the graphic object in a larger size as a distance from the position of the HMD to the point where the sound event is generated decreases.

Since the display method of the graphic object is changed on the display unit 151 according to the generation position of the sound event, the user may approximately recognize the position where the sound event is generated according to the display method of the graphic object.

In addition, the controller 180 may recognize information on a source of the sound event using the characteristics of a waveform corresponding to the sound event.

For example, a waveform of a sound that can be compared with the characteristics of a waveform corresponding to the sound event may be stored in the memory. Here, information on a waveform stored in the memory may be waveform information that can distinguish a source of the sound event, such as waveform information corresponding to a specific person's voice, waveform information on a sound of a specific musical instrument, and the like.

When the sound event is sensed through the microphone, the controller 180 may compare the characteristics, such as amplitude, frequency, period, and the like, of a waveform corresponding to the sound event with the waveform stored in the memory. The source of the sound event may be determined using the information of a waveform corresponding to the characteristics of the waveform corresponding to the sound event.

Also, the controller 180 may display an icon including information on a source of the sound event as the graphic object. For example, when the waveform corresponding to the sound event corresponds to the waveform information of a specific person stored in the memory, the controller 180 may display an icon 3 indicating the specific person (mommy) on the display unit 151 as illustrated in the drawing of FIG. 3B.

Therefore, even though the user does not directly hear a sound generated from the outside while using the HMD, the user may determine the source of the sound event by the graphic object.

Meanwhile, the controller 180 may control the display unit 151 and the audio output unit 152 based on various control commands received at the user input unit while the graphic object is displayed.

More specifically, when a first control command is received at the user input unit while the graphic object is being displayed, the controller 180 may change the display state of the screen information based on the first control command. Furthermore, when a second control command is received at the user input unit while the graphic object is being displayed, the controller 180 may change the display state of the screen information based on the second control command.

As described above, the first and second control commands may be received by a tactile input such as a touch or a push or a preset gesture sensed by at least one sensor. Hereinafter, a detailed description will be made with reference to FIGS. 4A and 4B.

FIGS. 4A and 4B are views illustrating an embodiment in which the output of screen information and audio information are controlled differently according to the type of a control command.

First, referring to FIG. 4A, the screen information 10 is displayed on the display unit 151, and a sound event may be generated from the outside while audio information is output to the audio output unit 152. In this case, the controller 180 may display a graphic object 1 informing the generation of the sound event on the display unit 151 based on the sound event satisfying a preset condition as illustrated in the second drawing of FIG. 4A.

When a first control command is received through the user input unit while the graphic object 1 is being displayed, the controller 180 may change the display state of the screen information 10 based on the first control command. For example, the first control command may be received by sensing a preset gesture (eye-blinking gesture) by the user in a state where the graphic object 1 is displayed as illustrated in the second drawing of FIG. 4A.

In this case, the controller 180 may control the display unit 151 to display detailed information on the sound event in at least a part of the screen information.

Here, when the sound event includes content for conveying certain information, the detailed information of the sound event may be specific content of the certain information. In addition, when the sound event includes a specific keyword, it may be text information corresponding to the specific keyword.

For example, as illustrated in the second drawing of FIG. 4A, the controller 180 may display information included in the sound event on at least a part of the screen information. In this case, the controller 180 may control the display unit so that a screen 11 a including a keyword of information included in the sound event and a specific image corresponding to the keyword is overlapped with at least a part of the screen information 10.

In addition, the controller 180 may display text information 11b corresponding to the sound event on at least a part of the screen information. In this case, when the sound event is a voice, the controller 180 may acquire text information corresponding to the sound event using a STT (Speech To Text) function.

As described above, the HMD according to the present disclosure may provide more specific information on the sound event based on the input of a control command in a state where a graphic object including brief information (e.g., a type, an origin, a location of sound event. etc.) on the generation of the sound event is displayed. Accordingly, the user may receive more detailed information on an external situation in connection with the sound event using a simple gesture while executing a function using the HMD.

In addition, the controller 180 may change the output state of the audio information according to a second control command received through the user input unit.

For example, as illustrated in the second drawing of FIG. 4B, in a state where the graphic object 1 is displayed, a preset movement of the body of the HMD 100 may be sensed based on at least one sensor included in the user input unit. The second control command may be received, for an example, as illustrated in the second drawing of FIG. 4B, in which the inclination of the body of the HMD is sensed by a nodding gesture of the user.

In this case, the controller 180 may control the audio output unit 152 to change an output volume of the audio information. Here, the output volume of the audio information may be output as small or large as a preset volume.

Also, the controller 180 may adjust the output volume of the audio information in response to a volume of the sound event sensed by the microphone.

For example, the controller 180 may reduce the output volume of the audio information by a predetermined ratio in response to the sound event volume. If the sound event is continuously generated, then the output volume of the audio information may be adjusted in response to the volume of the sound event, thereby allowing the user to hear the audio information and the sound event at the same time.

On the other hand, the controller 180 may perform the recording of the sound event based on the generation of the sound event. In this case, the controller 180 may acquire more detailed information on the sound event using the recorded data carried out for the sound event. Furthermore, when a control command is received while the graphic object is being displayed, the controller 180 may provide the user with detailed information on the sound event using the recorded data.

For an example, the controller 180 may acquire text information corresponding to the recorded data, and then display the text information on the display unit 151 or control the audio output unit 152 to output the recorded data together with the audio information as illustrated in the third drawing of FIG. 4B.

Whether or not to perform recording for the sound event may vary according to the setting of the user. In other words, the user may set recording to be carried out based on the generation of the sound event. Also, the user may set the recording of the sound event to be carried out based on a specific input being applied in a state where the graphic object is displayed.

On the other hand, although not shown in the drawing, the user may enter various control commands to terminate the display of the graphic object itself or terminate the output of at least one of the screen information and the audio information.

In this manner, the user may enter a different control command to change at least one output state of screen information and audio information currently being executed in the HMD to conveniently receive more detailed information on the sound event.

As described above, the controller 180 may independently control the screen information and the audio information, respectively, according to the type of the control command. In addition, the controller 180 may control the output states of the screen information and the audio information at the same time according to a single control command.

For example, the screen information corresponds to video information including a plurality of consecutive images that are changed according to the passage of time, and the audio information may be output based on the display of the video information. In this case, the controller 180 may control the display unit 151 and the audio output unit 152 to change the output state of the video information based on a control command received at the user input unit.

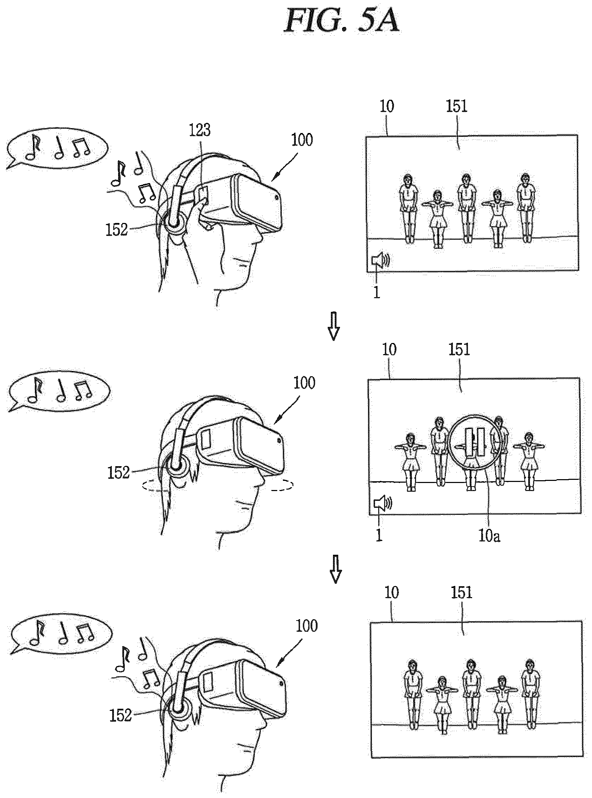

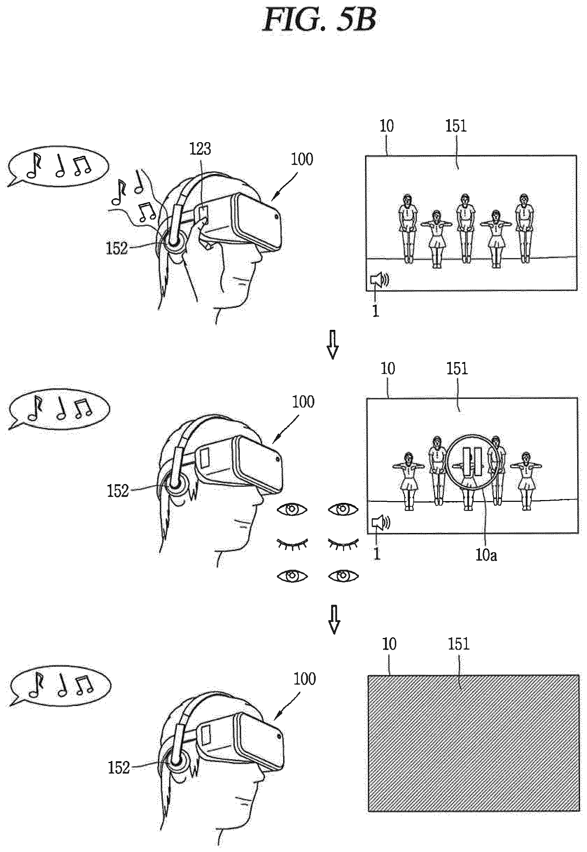

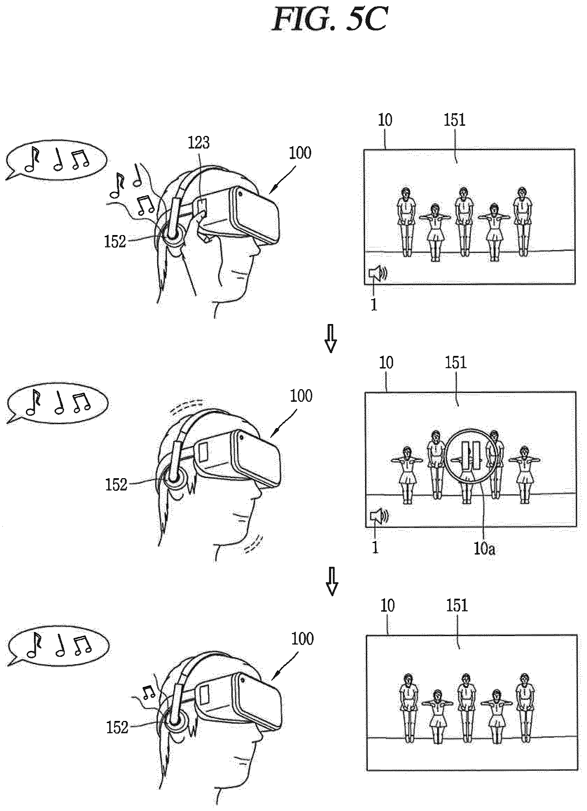

FIGS. 5A, 5B and 5C are views illustrating an embodiment in which an output state of video information is changed based on a control command when the video information is displayed.

First, referring to FIG. 5A, video information 10 may be displayed on the display unit 151, and audio information may be output based on the display of the video information 10. At this time, when a sound event generated from the outside of the HMD 100 satisfies a preset condition, the controller 180 may display the graphic object 1 on the display unit 151.

When the user enters a control command to the user input unit 123 while the graphic object 1 is being output, the controller 180 may stop the display of the video information 10.

More specifically, the controller 180 may stop the display of the video information 10 while an image displayed on the display unit 151 is being displayed when the preset control command is received among a plurality of images constituting the video information 10. In addition, the controller 180 may control the audio output unit 152 to restrict the output of the audio information when the display of the video information 10 is stopped.

Here, as illustrated in the second drawing of FIG. 5A, a preset first gesture (a gesture for moving the body of the HMD in a left and right direction) may be sensed through the user input unit. In this case, the controller 180 may control the display state of the video information 10 based on the preset first gesture.

In other words, as illustrated in the third drawing of FIG. 5A, the controller 180 may control the display unit 151 and the audio output unit 152 to cancel a display stop state of the video information 10 and play the video information 10 again.

At this time, the controller 180 may control the display unit 151 to display the video information 10 from an image corresponding to a next sequence of the one image among a plurality of images constituting the video information 10. Also, when the video information 10 is played back again, the display of the graphic object 1 displayed on the display unit 151 may be terminated.

Furthermore, the controller 180 may control the audio output unit 152 to output audio information corresponding to an image corresponding to a next sequence of the one image based on the playback of the video information 10.

Therefore, the user may temporarily stop the display of the video information to check the sound event while watching the video information. In addition, the user may enter a preset gesture to easily play the video information again.

On the contrary, in a state where the display of the video information 10 is stopped, a preset second gesture (when the user enters an eye-blinking gesture) may be sensed as illustrated in the second drawing of FIG. 5B. In this case, the controller 180 may control the display unit 151 and the sound output unit 152 to terminate the display of the video information based on the input of the preset second gesture.

In other words, as illustrated in the third drawing of FIG. 5B, the display unit 151 may be switched to an inactive state when the display of the video information is terminated. In other words, as illustrated in the third drawing of FIG. 5B, the display unit 151 may be switched to an inactive state when the display of the video information is terminated.

For another example, in a state where the display of the video information is stopped, a third gesture previously set by the user input unit may be sensed (when the movement of the body of the HMD is sensed by nodding a head of the user who wears the body of the HMD as illustrated in the second drawing of FIG. 5C)

In this case, the controller 180 may control the display unit 151 and the audio output unit 152 to play the video information again. However, the controller 180 may control the audio output unit 152 to output the audio information to be smaller than a volume of the audio information that has been output prior to stopping the display of the video information.

In this manner, when the screen information and the audio information are output based on the same video information, the controller 180 may stop the output of the screen information and the audio information at the same time based on a control command received through the user input unit.

In addition, the display state of the video information may be controlled in various ways based on various gestures applied through the user input unit in a state where the display of the video information is stopped. Accordingly, the user may check the sound event in a state where the display of the video information is stopped, and then additionally enter various gestures to select whether or not to continuously play the video information.

Meanwhile, the controller 180 may stop the display of the video information based on whether a sound event generated from the outside of the HMD satisfies a specific condition among preset conditions while the video information is being displayed on the HMD.

For example, when the sound event includes a preset keyword or a waveform corresponding to the sound event corresponds to a preset specific sound waveform, the controller 180 may determine that the sound event satisfies the specific condition.

When the sound event satisfies a specific condition as described above, the controller 180 may stop the display of the video information and display the graphic object on the display unit 151. Also, the display state of the video information may be controlled according to a control command received through the user input unit while the graphic object is being displayed.

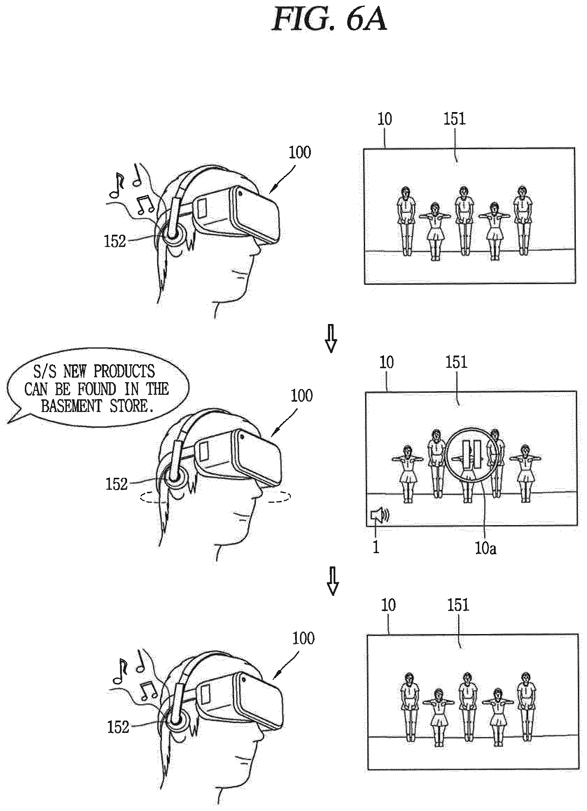

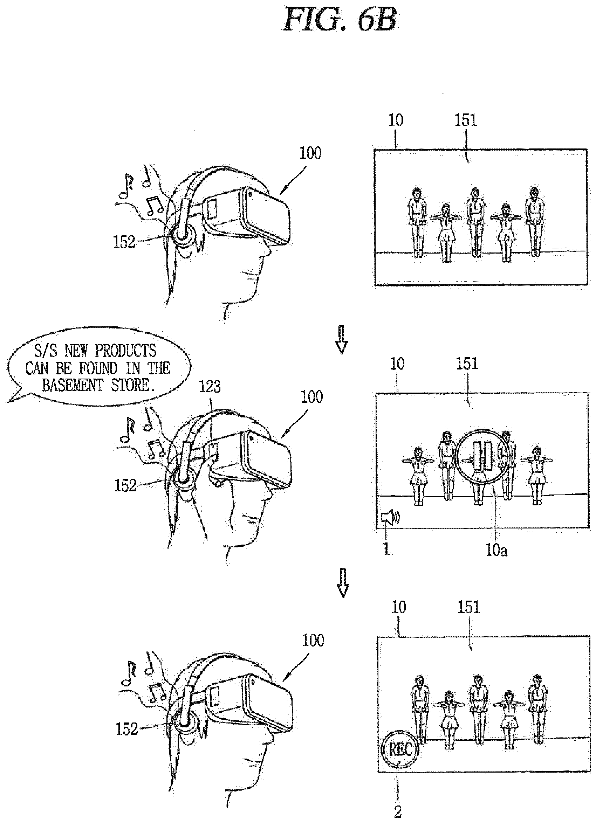

FIGS. 6A and 6B are views illustrating an embodiment related to a case where the output of video information is stopped based on a specific sound event.

First, referring to FIG. 6A, video information 10 may be displayed on the display unit 151, and audio information may be output to the audio output unit 152 based on the display of the video information 10. Also, as illustrated in the second drawing of FIG. 6A, when a sound event is generated from the outside, the controller 180 may determine whether the sound event satisfies a preset condition.

At this time, when the sound event includes preset specific keyword information (for example, new products), the controller 180 may determine that the sound event satisfies the specific condition. The controller 180 may control the display unit 151 and the audio output unit 152 to stop the display of the video information 10.

Furthermore, when the display of the video information 10 among a plurality of images constituting the video information is stopped, the controller 180 may display the graphic object 1 along with one image being displayed on the display unit 151.

In this manner, while the display of the video information 10 is stopped, a preset control command may be received through the user input unit while displaying the graphic object 1.

For example, as illustrated in the second drawing of FIG. 6A, when a gesture for moving the body of the HMD is sensed by the user input unit, the controller 180 may control the display unit 151 and the audio output unit 152 to play the video information 10 again. In this case, the controller 180 may control the display unit 151 to terminate the display of the graphic object 1 along with the playback of the video information 10.

On the contrary, as illustrated in the second drawing of FIG. 6B, when a control command for touching the user input unit 123 mounted on one region of the body of the HMD is received while the display of the video information 10 is stopped, the controller 180 may perform recording of the sound event.

Furthermore, the controller 180 may control the display unit 151 and the audio output unit 152 to play the video information 10 again while recording the sound event. In this case, the controller 180 may control the display unit 151 to display information 2 informing the user that the recording is to be carried out while at the same time terminating the display of the graphic object.

In this manner, the controller 180 may immediately stop the display of the video information based on the sound event satisfying a preset condition. Therefore, when a sound event satisfying a preset condition (for example, when specific keyword information is included therein or a specific person's voice information) is generated, the user may be provided with convenience capable of directly checking the sound event without entering an additional control command.

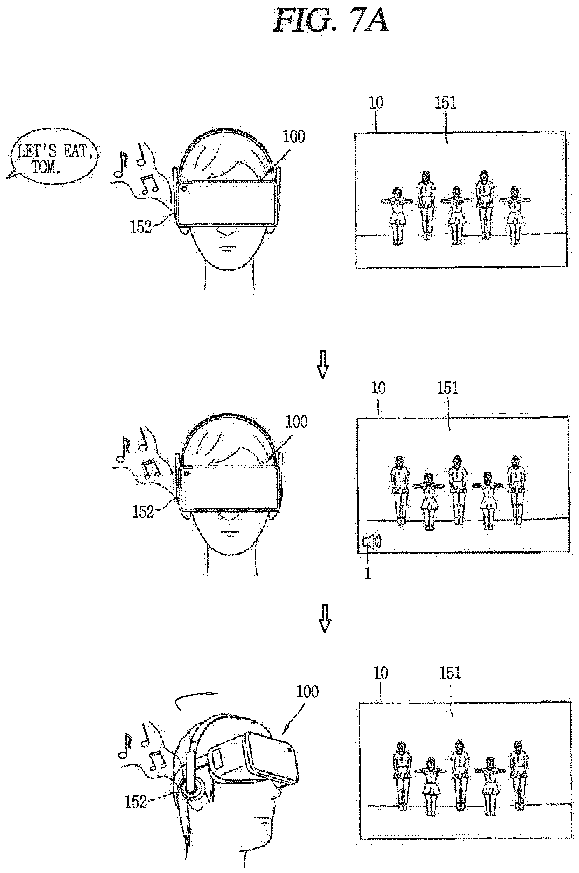

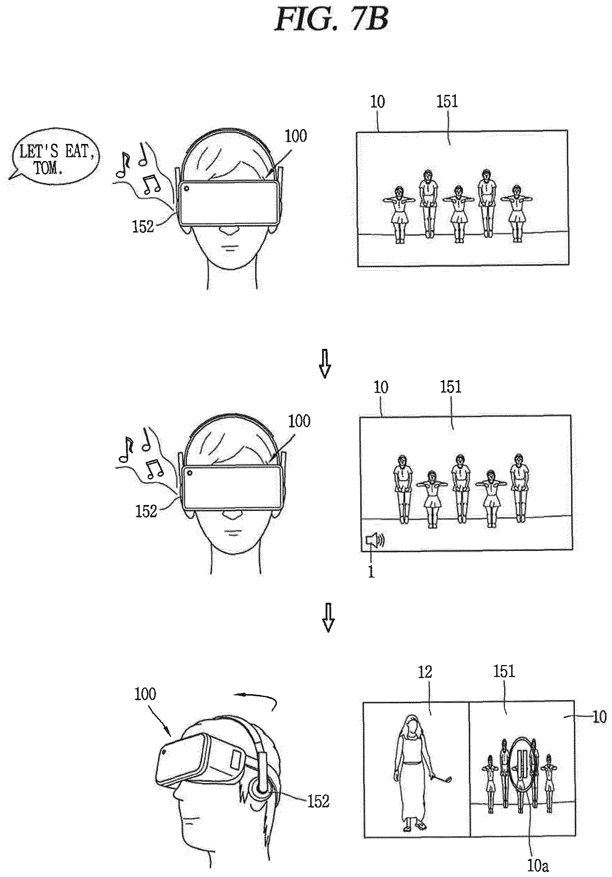

On the other hand, a display position of the graphic object on the display unit 151 may be determined by a position where the sound event is generated as described above in FIG. 3A. In this case, when a control command related to a display position of the graphic object is received through the user input unit, the controller 180 may determine the user's intention based on the control command. In addition, the output state of the screen information and the audio information may be changed according to the user's intention. It will be described with reference to FIGS. 7A and 7B.

FIGS. 7A and 7B are views illustrating an embodiment of controlling an output state of screen information and audio information according to the type of a control command when a graphic object is displayed in response to a position where a sound event is generated.

First, referring to FIG. 7A, a sound event may be generated on the right side of a user wearing the body of the HMD on the basis of the body of the HMD. In this case, the controller 180 may analyze a sound event sensed by the microphone to determine a position where the sound event is generated.

Then, the controller 180 may control the display unit 151 to display the graphic object 1 in a region of the display unit 151 corresponding to a position where the sound event is generated. For example, as illustrated in the second drawing of FIG. 7A, the graphic object 1 may be displayed in one region on the right side of the display unit 151 in a direction in which the user looks at the display unit 151.

At this time, a control command for moving the body of the HMD in a direction (opposite direction) away from the position where the sound event is generated may be sensed by the user input unit. For example, as illustrated in the third drawing of FIG. 7A, the user may enter the control command with a gesture of turning his or her head in a left direction while wearing the HMD 100. In this case, the controller 180 may determine the user's intention for maintaining the output state of the screen information and the audio information.

Accordingly, the controller 180 may control the display unit 151 to maintain the output state of the screen information and the audio information based on the input of the control command, and terminate only the display of the graphic object 1.

On the contrary, as illustrated in the third drawing of FIG. 7B, when the movement of the HMD 100 toward the position where the sound event is generated (a gesture of the user wearing the HMD that turns his or her head in a right direction) by the user input unit. The controller 180 may determine the user's intention desired to check information related to the sound event.

Accordingly, the controller 180 may change the output state of the screen information and the audio information based on the input of the control command. For example, when the screen information and the audio information are output based on the playback of specific video information, the controller 180 may stop the display of the video information.

In addition, the controller 180 may activate the camera mounted on the body of the HMD based on the input of the control command. In other words, the controller 180 may control the camera to capture a preset angle-of-view range of the camera based on the movement of the body of the HMD toward the position where the sound event is generated.

Furthermore, the controller 180 may control the display unit 151 to display a preview screen 12 captured by the camera together with the video information 10, the display of which is stopped.

Accordingly, the user may move the body of the HMD toward the position where the sound event is generated to receive specific time information on the external situation while wearing the HMD.

As described above, the HMD according to the present disclosure may predict the user's intention based on a direction in which the user wearing the body of the HMD moves the body of the HMD in a state where the graphic object is displayed on the display 151 at a position corresponding to the position where the sound event is generated. Accordingly, the controller 180 may perform control corresponding to the user's intention, such as holding or terminating a function that has been being executed in the HMD.

Meanwhile, the HMD may include a camera in the body of the HMD, and the camera may capture a subject included in a preset angle of view. As described above in the embodiment of FIG. 7B, the camera may be activated based on the input of a specific control command to perform capturing. In addition, the controller 180 may display a preview screen captured by the camera on the display unit 151.

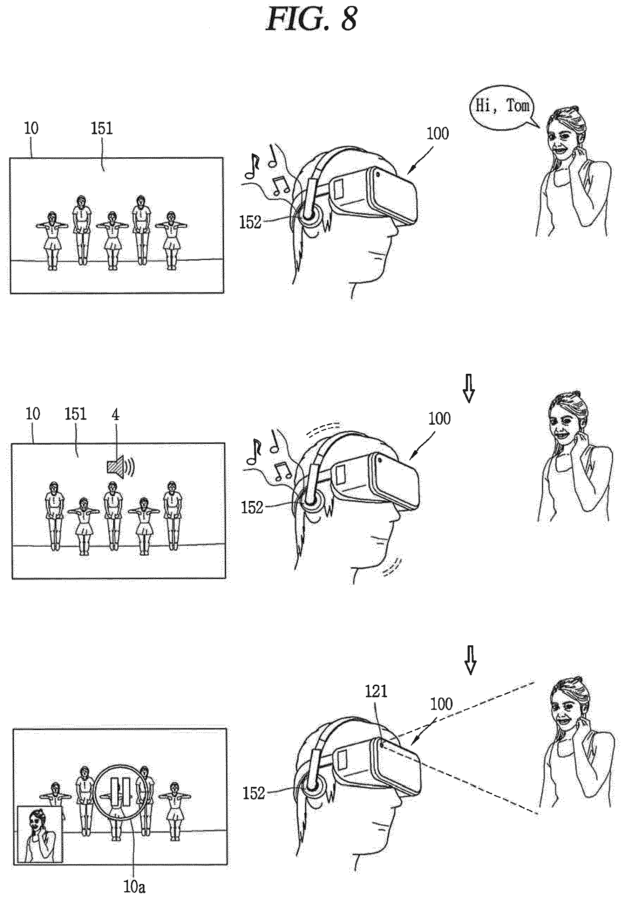

FIG. 8 is a view related to an embodiment of providing a preview screen captured based on an input of a control command.

Referring to FIG. 8, video information 10 may be displayed on the display unit 151, and audio information may be output to the audio output unit 152 based on the display of the video information 10. At this time, when a sound event is generated in the front of the HMD, the controller 180 may display the graphic object based on the sound event satisfying a preset condition.

In addition, the controller 180 may analyze a position where the sound event sensed by the microphone is generated, and then determine a display position of the graphic object on the display unit 151. In other words, as illustrated in the second drawing of FIG. 8, the graphic object 4 may be displayed at an upper center of the display unit 151 based on the position of a sound event generated in front of the HMD.

As described above, when a preset control command is received through the user input unit while the graphic object 4 is being displayed, the controller 180 may activate the camera based the preset control command.

More specifically, the controller 180 may determine whether or not the preset control command is an input related to a position where the sound event is generated. Here, an input related to the position where the sound event is generated may be an input in which the body of the HMD moves so that a direction facing a front side of the body of the HMD corresponds to a position where the sound event is generated.

For example, as illustrated in FIG. 8, when the sound event is generated on a front side of the HMD body, the controller 180 may determine whether or not the front side of the body faces a direction in which the sound event is generated by the movement of the body (nodding gesture) by the user as illustrated in the second drawing of FIG. 8.

In other words, when the input of the preset control command is applied by the movement of the body of the HMD, and a front side of the main body faces a position where the sound event is generated due to the movement, the controller 180 may activate the camera.

In addition, the controller 180 may display a preview screen captured by the camera on the display unit 151, along with the activation of the camera. At this time, the controller 180 may control the display unit 151 to stop the display of the video information based on the input of the preset control command, and display the preview screen together with a video screen, the display of which is stopped.

The preview screen may be displayed on the display unit 151 in various ways. For example, the preview screen may be displayed to overlap with at least a part of video screen, the output of which is stopped or displayed in a PIP (Picture In Picture) manner in a part of the video screen as illustrated in the third drawing of FIG. 8.

Meanwhile, although not shown in the drawing, the controller 180 may provide the preview screen along with video information without stopping the display of the video information according to the setting.

For another example, when the control command is not an input by the movement of the body (for example, when an input such as a touch or a push is applied), the controller 180 may determine a direction in which a front side of the body faces based on the input and determine whether or not the camera is activated. If a front side of the body does not face a position where the sound event is generated, the controller 180 may provide notification information thereof to the user.

For still another example, the camera is always in an active state, and the controller 180 may display a preview screen captured by the camera based on the input of the control command.

As described above, when the body of the HMD is directed to the position where the sound event is generated, the user is provided with a captured screen of the position where the sound event is generated, thereby providing the user with more specific visual information on the sound event.

On the other hand, the user may not want to be disturbed by the use of the HMD even if an external sound event or a movement event is generated. In this case, the HMD according to the present disclosure may restrict the output of the notification of the external situation (for example, the output of a graphic object notifying the generation of the sound event) based on a specific setting such as a do-not-disturb mode. However, there may be a need for the user to check an external event generated while using the HMD after the execution of a function that has been used in the HMD is completed.

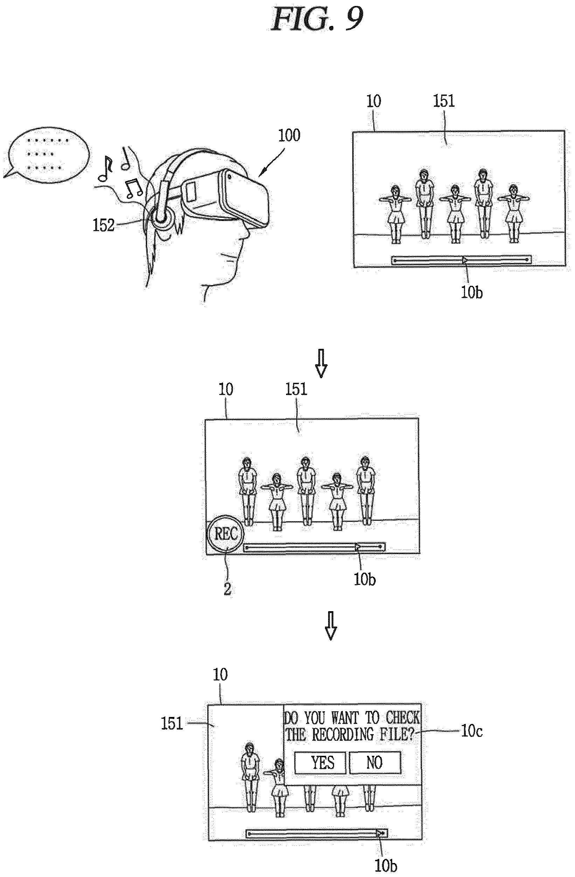

FIG. 9 is a view illustrating an embodiment in which an notification of an external event that has generated during the use of the HMD is displayed when the use of the HMD is terminated.

As illustrated in the first drawing of FIG. 9, for example, an event may be generated while video information 10 is displayed on the display unit 151, and audio information is output through the audio output unit 152 based on the video information 10.

In addition, the HMD may be set in a do-not-disturb mode for restricting event notifications generated during the execution of a specific function by a user. In this case, the controller 180 may perform the recording of the sound event sensed by the microphone. In addition, the controller 180 may display information on the performance of the recording in one region of the video information 10.

In other words, the controller 180 may provide only the notification of whether or not to perform the recording while maintaining the display of the video information. Then, as illustrated in the third drawing of FIG. 9, when the playback of video information is completed, the controller 180 may display a message 10c for requesting the confirmation of the recorded data of the sound event on the display unit 151.

Accordingly, the user may be provided with information on an external situation which has not been checked during the use of the HMD, without being disturbed by the use of the HMD.

According to the present disclosure, the HMD may sense an external sound event through the microphone while audio information is being output, and notify the user of the external sound event, thereby allowing the user to receive information on an external situation that is difficult to recognize due to the execution of a specific function. Here, the generation of the sound event may be provided to a user through a graphic object, and the graphic object may include information on the sound event, thereby allowing the user to approximately recognize an external situation when the graphic object is displayed on the display unit.

Furthermore, in a state where the graphic object is displayed, the user may receive convenience capable of controlling the execution state of a specific function being executed in relation to a sound event generated from the outside in various ways according to various control commands.

The foregoing present disclosure may be implemented as codes readable by a computer on a medium written by the program. The computer-readable media includes all types of recording devices in which data readable by a computer system can be stored. Examples of the computer-readable media may include ROM, RAM, CD-ROM, magnetic tape, floppy disk, and optical data storage device, and the like, and also include a device implemented in the form of a carrier wave (for example, transmission via the Internet). In addition, the computer may include the controller 180 of the HMD. The foregoing embodiments are merely exemplary and are not to be considered as limiting the present disclosure. The scope of the invention should be determined by reasonable interpretation of the appended claims and all changes that come within the equivalent scope of the invention are included in the scope of the invention.

## Claims

1. A head mounted display (HMD) formed to be wearable on a head of a user, the HMD comprising:
a display unit formed to display screen information;
an audio output unit configured to output audio information;
a microphone configured to sense a sound event generated from an outside of the HMD in a state where the audio information is output;
a user input unit configured to receive a control command for controlling the display unit and the audio output unit; and
a controller configured to control the display unit to display a graphic object informing the generation of the sound event based on whether the sound event sensed through the microphone satisfies a preset condition, and activate the user input unit to change an output state of at least one of the screen information and the audio information while the graphic object is being displayed.

2. The HMD of claim 1, wherein the preset condition is related to at least one of a preset decibel range of sound, a preset waveform characteristic of sound, and preset keyword information.

3. The HMD of claim 1, wherein the controller changes an output state of at least one of the screen information and the audio information in a different manner according to the type of the control command received through the user input unit.

4. The HMD of claim 3, wherein the controller controls the display unit to display detailed information on the sound event on at least a part of the screen information when a preset first control command is received through the user input unit, and controls the audio output unit to change an output volume of the audio information when a preset second control command is received through the user input unit.

5. The HMD of claim 4, wherein when the sound event is voice information, the controller controls the display unit to display text information corresponding to the voice information on at least a part of the screen information based on receiving the preset first control command.

6. The HMD of claim 4, wherein the controller controls the audio output unit to output the audio information as small as a preset ratio corresponding to a volume at which the sound event is sensed based on receiving the preset second control command.

7. The HMD of claim 1, wherein when the screen information corresponds to video information including a plurality of consecutive images that change over time, and the audio information is output based on the display of the video information, the controller controls the display unit and the audio output unit to stop the display of the video information based on whether the sound event satisfies a specific condition among the preset conditions.

8. The HMD of claim 7, wherein the graphic object is displayed together with one image displayed on the display unit when the display of the video information is stopped among the plurality of images, and the controller controls the display unit and the audio output unit to change an output state of the video information according to the type of the control command received from the user input unit.

9. The HMD of claim 8, wherein the controller controls the display unit and the audio output unit to terminate the output of the graphic object and play the video information from an image corresponding to a subsequent order of the one image when a first control command is received through the user input unit, and controls the display unit and the audio output unit to terminate the display of the video information when a second control command is received through the user input unit.

10. The HMD of claim 1, wherein the controller controls the audio output unit to decrease an output volume of the audio information based on the sound event satisfying a specific condition among the preset conditions.

11. The HMD of claim 10, wherein, when a preset control command is received through the user input unit in a state in which an output volume of the audio information is decreased, the controller performs the recording of the sound event, and controls the display unit to display information informing the execution of the recording in one region of the screen information.

12. The HMD of claim 1, wherein the controller recognizes a position where the sound event is generated based on the analysis of the sound event, and controls the display unit to display the graphic object in a region of the display unit corresponding to the position where the sound event is generated.

13. The HMD of claim 12, further comprising:
a camera mounted on a main body of the HMD to perform the shooting of an outside of the HMD,
wherein the controller activates the camera based on a specific control command received through the user input unit.

14. The HMD of claim 13, wherein the user input unit comprises at least one sensor for sensing the movement of the body of the HMD, and the specific control command is received by at least one sensor that has sensed the movement of the body of the HMD toward a position where the sound event is generated.

15. The HMD of claim 13, wherein the controller controls the display unit to display a preview image captured by the camera to overlap with at least a part of the screen information.

16. A method of controlling an HMD formed to be wearable on a head of a user, the method comprising:
displaying screen information on a display unit; outputting audio information to an audio output unit;
sensing a sound event generated from an outside of the HMD in a state where the audio information is output;
displaying a graphic object informing the generation of the sound event when the sensed sound event satisfies a preset condition; and
activating a user input unit that receives a control command for controlling the display unit and the audio output unit to change an output state of at least one of the screen information and the audio information while the graphic object is being displayed.

17. The method of claim 16, wherein the preset condition is related to at least one of a preset decibel range of sound, a preset waveform characteristic of sound, and preset keyword information.

18. The method of claim 17, further comprising:
changing an output state of at least one of the screen information and the audio information in a different manner based on the type of a control command when the control command is received through the user input unit while the graphic object is being displayed.

19. The method of claim 18, wherein said changing the output state of at least one of the screen information and the audio information in a different manner displays detailed information on the sound event on at least a part of the screen information when a first control command is received through the user input unit, and changes an output volume of the audio information when a second control command is received through the user input unit.

20. The method of claim 16, wherein said displaying the graphic object on the display unit recognizes a position where the sound event is generated based on an analysis of the sound event, and displays the graphic object in a region of the display unit corresponding to a position where the sound event is generated.
